# EUROPÄISCHE PATENTSCHRIFT

(11) **EP 2 713 708 B1**
(45) Veröffentlichungstag und Bekanntmachung des Hinweises auf die Patenterteilung: **14.01.2015**
(21) Anmeldenummer: 12723484.7
(22) Anmeldetag: 24.05.2012
(51) Int. Cl.: A01J 25/00, A01J 25/12

(54) **VERFAHREN UND VORRICHTUNG ZUM FORMEN UND KÜHLEN EINER ZUNÄCHST HEISSEN UND DAHER FLIESSFÄHIGEN KÄSESCHMELZE**
METHOD AND DEVICE FOR CASTING A CHEESE CURD
PROCÉDÉ POUR FAÇONNER ET FAIRE REFROIDIR UNE MASSE DE FROMAGE FONDUE PRÉALABLEMENT CHAUDE ET PAR CONSÉQUENT COULANTE

(30) Priorität: 01.06.2011 DE 102011103826
(43) Veröffentlichungstag der Anmeldung: 09.04.2014
(73) Patentinhaber: Hochland SE, 88178 Heimenkirch (DE)
(72) Erfinder: ZEUSCHNER, Roland, 88260 Argenbühl (DE); HARTMANN, Walter, 88178 Heimenkirch (DE); STADELMANN, Franz, 88145 Opfenbach (DE)
(74) Vertreter: Braun-Dullaeus Pannen Patent- und Rechtsanwälte
(86) Internationale Anmeldenummer: PCT/EP2012/059701
(87) Internationale Veröffentlichungsnummer: WO 2012/163795

(56) Entgegenhaltungen:
- WO-A1-2005/000012
- DE-A1- 3 731 135
- GB-A- 1 137 178

## Beschreibung

Die Erfindung betrifft ein Verfahren zum Formen und Kühlen einer zunächst heißen und daher fließfähigen Käseschmelze.

Das Herstellen von Schmelzkäse, insbesondere in Scheibenform, ist Gegenstand vieler Vorrichtungen. Üblicherweise wird dabei eine Masse von Schmelzkäse zunächst zu einer Art Schmelzkäseband geformt. Bei der Formung und Weiterverarbeitung des Schmelzkäses stellen insbesondere die thermischen Anforderungen eine große Herausforderung dar, da der Schmelzkäse zunächst eine gewisse hohe Temperatur haben muss, um formbar zu sein. Während der Weiterverarbeitung muss dann eine relativ rasche Kühlung vorgenommen werden, damit der Schmelzkäse sein Form behält.

Aus der DE 10 2008 061 330 A1 ist ein Verfahren zum Schneiden von Stücken vorgebbarer Länge aus einer Käsemasse bekannt. Ein Käseband wird mittels eines Förderbandes einer Schneideinrichtung zugeführt. Dann erfolgt ein Schneiden des Käsebandes in Längsstreifen. Die Längsstreifen werden anschließend mit einem Querschneidemittel in Stücke geschnitten. Auf diese Weise lassen sich zwar in einem robusten Prozess Schmelzkäsescheiben herstellen; unregelmäßige geformte Schmelzkäsescheiben lassen sich aber nicht verschnittfrei herstellen.

Die WO 2007/122311 zeigt ein Verfahren zum Herstellen von Schmelzkäsescheiben. Eine Schmelzkäsemasse wird dabei unmittelbar auf eine Formwalze aufgebracht, wobei die Schmelzkäsemasse Formausnehmungen an der Formwalze ausfüllt. Die Formwalze rotiert dabei und führt die in den Formausnehmungen angeordneten scheibenförmigen Käseportionen einer Fördereinheit zur weiteren Bearbeitung zu. Koaxial um die Formwalze herum sind Kühlmittel angeordnet, die jeweils nur einer Oberflächenseite der Käsescheiben zugewandt sind. Die gezeigte Anordnung zur Durchführung des Verfahrens weist aber Mängel bei der zuverlässigen Befüllung der Formausnehmung auf. Die rotatorische Bewegung während des Kühlvorgangs wirkt sich ferner nachteilig auf die Formgebung aus. Ferner ist die Kalibrierung der thermischen Bedingungen innerhalb der Vorrichtung problematisch, da die Kühlmittel beabstandet zu den Käsescheiben ist. Insgesamt kann sich eine ungleichmäßige Oberflächenoptik ergeben. Aufgrund der relativ kurzen Kühllänge an der Formwalze kann sich die Formwalze nur langsam bewegen. Es ergibt sich eine geringe Produktionsleistung.

Weitere Vorrichtungen und Verfahren sind aus WO 2005/000012 und GB 1137178 bekannt. Hiervon ausgehend ist es Aufgabe der vorliegenden Erfindung, ein verbessertes Verfahren bzw. eine verbesserte Vorrichtung zum Formen und Kühlen einer zunächst heißen und daher fließfähigen Käseschmelze bereitzustellen. Nach Möglichkeit sind die angesprochenen Mängel zu beheben.

Die Erfindung zugrunde liegende Aufgabe wird gelöst durch ein Verfahren zum Formen und Kühlen einer zunächst heißen und daher fließfähigen Käseschmelze, die über einen Zuführstutzen auf ein bewegtes metallisches Kühlband aufgebracht wird, wobei mittels einer das Kühlband beaufschlagenden Formwalze mit in der Oberfläche befindlichen Formnestern einzelne Formlinge aus der Käseschmelze geformt werden. Beim Formen wird die Formwalze mit einem definierten Anpressdruck gegen das Kühlband beaufschlagt, so dass eine vollständige Verdrängung der noch heißen Käseschmelze aus dem Bereich der die einzelnen Formnester begrenzenden und an dem Kühlband anliegenden Trennstege bewirkt wird. Die Formlinge werden dann aus den Formnestern ausgelöst und durch Verbleib auf dem bewegten Kühlband gekühlt. Das Kühlband bewegt sich vorzugsweise zunächst in etwa nach vertikal unten.

Ein wesentlicher Grundgedanke der Erfindung liegt darin, die Formlinge in fließfähigem Zustand quasi durch Ausstanzen unter relativ hohem Druck der Formelemente, nämlich Kühlband und Formwalze, zu formen. Der hohe Druck bewirkt dabei auch, dass im Bereich der Trennstege die Käseschmelze vollständig entweicht. Durch den hohen Druck kann dabei sichergestellt werden, dass die Formnester vollständig ausgefüllt werden, sodass eine Vielzahl von möglichen Formen realisiert werden können, sogar die Bildung von Hinterschneidungen sind möglich. Von den Trennstegen wird dabei das überschüssige Käsematerial verdrängt. Dabei ist es besonders vorteilhaft, wenn das verdrängte, fließfähige Käsematerial sich relativ nah am vorhandenen Vorrat der fließfähigem Käseschmelze befindet. Das verdrängte Material kann somit aufgefangen und der fließfähigen Käseschmelze ohne weiteres erneut zugeführt werden. Es entsteht damit kein Verlust an fließfähiger Käseschmelze. Ein weiterer Grundgedanke liegt insbesondere an der sehr guten Kontrollierbarkeit und Kalibrierbarkeit der Kühlung der Käseschmelze während der Formgebung und unmittelbar nach der Formgebung, da die Käseschmelze, zumindest mittelbar, auf dem bewegte Kühlband aufgebracht ist. Durch das zumindest mittelbare Aufbringen, was vorzugsweise ein unmittelbares Anbringen an gekühltem Material (außer Luft) sichergestellt, kann die Prozesssicherheit erhöht werden. Als Mittel zur mittelbaren Verbindung zwischen Kühlband und Käseschmelze bzw. Formlingen eignen sich insbesondere Folien, insbesondere solche Folien, die auch später zur Separierung von einzelnen Käsescheiben verwendet werden, insbesondere einer Zwischenlagenfolie.

Vorzugsweise werden die auf dem Kühlband aufliegenden Formlinge von einem mit der selben Geschwindigkeit bewegten weiteren zweiten Kühlband bedeckt. Das zweite Kühlband, welches insbesondere erst dann die Formlinge bedeckt, wenn die Formlinge aus der Formwalze entnommen sind, kann ein verbessertes kontrolliertes Kühlen bewirken, da die Kühlleistung gleichmäßig, insbesondere von zwei Seiten, auf die Formlinge aufgebracht werden kann. Dies ist insbesondere bei komplex geformten Formlingen vorteilhaft, da aufgrund möglicher unterschiedlicher Stärken des Formling sich unterschiedliche Bereiche ergeben können, insbesondere solche mit vergrößerter Stärke, die einen erhöhten Bedarf an Kühlung aufweisen. Es kann sich ferner eine verbesserte Oberflächenqualität der Formlinge ergeben.

Vorzugsweise werden die Formlinge an einem der Kühlbänder an einer insbesondere aus Kunststoff bestehenden Zwischenlagenfolie anliegen, wobei im Anschluss an die Kühlung der von der Zwischenlagenfolie und den Formlingen gebildete Produktstrang so orientiert wird, dass die Formlinge auf der Zwischenlagenfolie aufliegen und in dieser Orientierung der weiteren Verarbeitung zugeführt werden, wobei die aufliegenden Formlinge der weiteren Verarbeitung insbesondere durch Schneiden der Zwischenlagenfolien vereinzelt werden. Die Zwischenlagefolie kann insbesondere auch in Form von mehreren parallel angeordneten Folienstreifen zugeführt werden, wobei die einzelnen Folienstreifen dann eine den Formlingen entsprechende Breite aufweist. Das separate Längsschneiden der Zwischenlagenfolie kann dann entfallen.

Das Verwenden von Zwischenlagenfolien zwischen dem Kühlband und den Formlingen kann eine Reihe von Vorteilen aufweisen. So kann die Zwischenlagenfolie bereits während des Herstellungsverfahrens der Formlinge, vorzugsweise schon vor dem Formen der Formlinge, zwischen die Schmelzkäsemasse und die Kühlbänder angebracht werden. Die Zwischenlagenfolie kann dann insbesondere eine Art Werkstückträger für den einzelnen Formling darstellen, auf dem der Formling dann während der weiteren Verarbeitung dauerhaft positioniert bleibt. Hierbei zeichnet sich insbesondere die zumeist geringe Reibung der Zwischenlagenfolie auf metallischem Untergrund als besonders vorteilhaft aus, da eine Umpositionierung eines Werkstücks mitsamt des Werkstückträgers (Zwischenlagenfolie) auf andere Förderbänder oder Ähnliches vereinfacht durchgeführt werden kann. Zugleich bleibt die Oberfläche des Formlings von mechanische Einwirkungen weitgehend verschont. Insbesondere wenn der Formling während des Kühlvorgangs auf beiden Seiten durch eine Folie bedeckt ist, kann eine der beiden Folien die genannte Zwischenlagenfolie sein, wohingegen auf der anderen Seite lediglich eine Art Hilfsfolie verwendet wird, die z.B. beim Verlassen der Kühlvorrichtung von dem Formling entfernt werden kann. Die Zwischenlagenfolie hingegen kann bis zum Endverbraucher an dem Formling verbleiben.

Die Erfindung betrifft ferner eine Vorrichtung zum Formen und Kühlen einer zunächst heißen und daher fließfähigen Käseschmelze, aufweisend einen Zuführstutzen zum Auftragen der Käseschmelze auf ein bewegtes metallisches Kühlband und aufweisend eine in Bewegungsrichtung hinter dem Zuführstutzen angeordnete Formwalze. Die Formwalze beaufschlagt das Kühlband an einer Stelle, an der dieses an einer Gegendruckwalze anliegt, wobei die Formwalze eine Anzahl in die Oberfläche eingebrachter Formnester aufweist, die durch Trennstege gegeneinander, insbesondere ganz oder teilweise, abgetrennt sind. Die Trennstege sind insbesondere von der verbleibenden Oberfläche der Formwalze ausgebildet, wobei die Formwalze mittels der Trennstege einen Anpressdruck auf das Kühlband ausüben kann, der zur vollständigen Verdrängung der noch heißen Käseschmelze aus dem Bereich der aufliegenden Trennstege führt. Die aus den Formnestern ausgelösten Formlinge aus der Käseschmelze verbleiben zur Kühlung auf dem bewegten Kühlband. Dabei kann lediglich auch nur ein mittelbarer Kontakt zwischen Formling und Kühlband vorgesehen sein. Es ergeben sich die bezüglich des Verfahrens bereits genannten Vorteile und weiteren Ausgestaltungsmöglichkeiten. Vorzugsweise ist ein weiteres zweites Kühlband vorgesehen, dass mit der selben Geschwindigkeit wie das erste Kühlband bewegt ist und die auf dem ersten Kühlband aufliegenden Formlinge bedeckt.

Vorzugsweise sind Kühlbänder als endlose Bänder, insbesondere aus Stahl, ausgebildet, die jeweils über zwei Umlenkwalzen laufen, wobei die Kühlbander vertikal angeordnet ist und oben einen Einlassspalt und unten einen Auslassspalt bilden. Im Bereich des Einlassspalts wird dabei vorzugsweise die Formwalze zur Ausbildung der Formlinge angeordnet. Beim Auslassspalt trennen sich die zwei Kühlbänder und können den Formling zumindest kurzfristig und einseitig freigeben, sofern die Formlinge nicht zweiseitig durch Folien verdeckt sind. Die vertikale Ausrichtung der Kühlbänder kann dabei die bekannten Vorteile aufweisen, nämlich dass der Formling im wesentlichen während der Kühlung von seiner eigenen Gewichtskraft im wesentlichen entkoppelt sein kann. Die Kühlbänder können dabei gleichmäßig an dem Formling anliegen und eine gleichmäßige Kühlung auf den Formling aufbringen. Zwar kann es grundsätzlich Schwierigkeiten bereiten, die bereits vereinzelten Formlinge vertikal anzuordnen, da diese nicht mehr an eine langen Käseband vertikal aufgehängt sind.

Bei Formlingen, die bereits im geschmolzenen Zustand vereinzelt sind, kann sich insbesondere bei der Verwendung von vertikalen Kühlbändern ergeben, dass diese Formlinge noch im geschmolzenen Zustand durch Fließen ihre Form verlieren. Insbesondere ist dies der Fall, wenn die Formlinge eine relativ hohe Dicke von insbesondere mehr als 3 mm aufweisen. Durch langsames Fahren der Kühlbänder kann diesem Effekt entgegengewirkt werden, so dass auch die Verwendung von vertikalen Kühlbändern bei im geschmolzenen Zustand vereinzelten Formlingen möglich ist.

Vorzugsweise ist eine Vorrichtung zur Zuführung einer Zwischenlagenfolie in den Einlassspalt derart vorgesehen, dass die Formlinge an einem der Kühlbänder vermittels der insbesondere aus Kunststoff bestehenden Zwischenlagenfolie anliegt.

Vorzugsweise ist ferner eine Kalibrierwalze vorgesehen, die in Bewegungsrichtung hinter dem Zuführstutzen und vor der Formwalze angeordnet ist. Die Kalibrierwalze bewirkt ein Auswalzen der heißen Käseschmelze zu einem Käseband vorgebbarer Stärke. Durch die Kalibrierwalze wird im wesentlichen zunächst eine Art Käseband erzeugt, welches im nachfolgenden Schritt dann mit Hilfe der Formwalze ausgestanzt wird. Hierbei kann sichergestellt werden, dass der Formwalze ein Käseband mit definiert vorgegebener Stärke zugeführt wird. Die Prozesssicherheit kann hierdurch verbessert werden, wobei zugleich auch ein unnötiger Verlust an "zuviel" der Formwalze zur Verfügung gestellter Schmelzkäsemasse verhindert werden kann. Ferner kann die Gewichtsgenauigkeit der einzelnen Formlinge verbessert werden.

Vorzugswelse ist die mit Formnestern versehene Oberfläche der Formwalze aus einem Kunststoff, insbesondere aus Teflon gebildet. Die Formwalze kann dabei im wesentlichen eine Stahlwalze, insbesondere eine Edelstahlwalze sein, die mit der Kunststoffbeschichtung, insbesondere einer Teflonbeschichtung, versehen ist. Neben Teflon sind aber auch andere Beschichtungen, die eine leichte Ablösbarkeit der Käseschmelze bewirken, vorteilhaft.

Vorzugsweise wird die Formwalze von einer Kernwalze und einer auf die Kernwalze lösbar aufgesetzten Mantelwalze gebildet. Die Mantelwalze bildet dabei die mit den Formnestern versehene Oberfläche aus. Durch die Zweiteilung der Walze kann eine Austauschbarkeit der formgebenden Elemente an der Walze möglich werden. Sollte beispielsweise mit der gleichen Vorrichtung Formlinge von anderer Form hergestellt werden, dann wird nicht der Austausch der gesamte Walze erforderlich. So kann mit geringem Aufwand die Vorrichtung an neue Formen angepasst werden, in dem lediglich die ggf. günstige Mantelwalze ausgetauscht wird. Ferner kann aufgrund der leichten Austauschbarkeit die Mantelwalze im Gegensatz zur Kernwalze als günstiges Verschleißteil ausgebildet werden.

Vorzugsweise weist die Formwalze und/oder die Kalibrierwalze und/oder die Umlenkwalze Mittel zur Kühlung auf. Die Kühlleistung kann durch das Vorsehen der gekühtten Walzen verbessert werden, insbesondere dahin, dass die Kühlleistung an nahezu allen Bereichen der Vorrichtung, die zumindest mittelbar mit heißem Käse in Berührung geraten, definiert einstellbar ist.

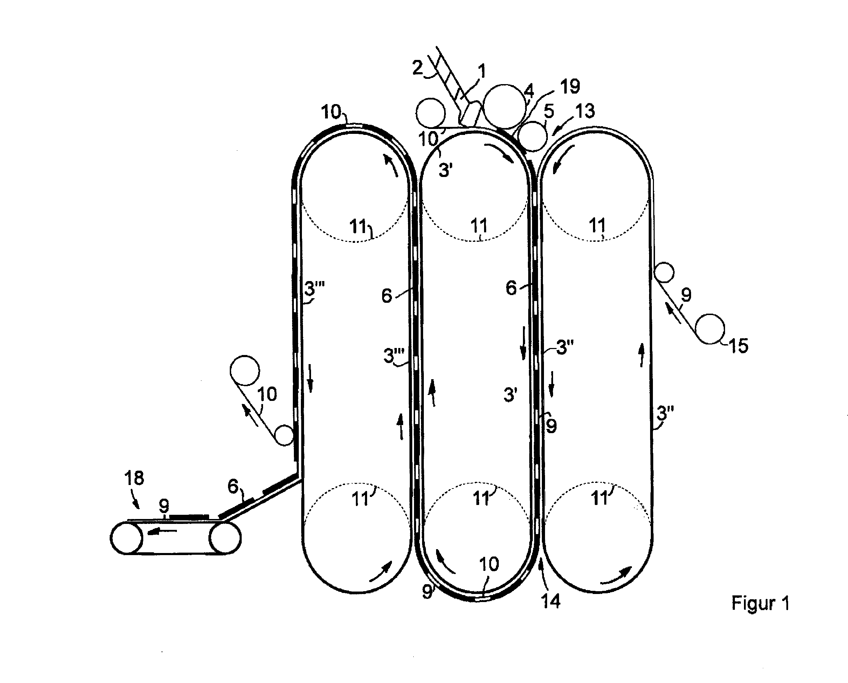

Die Erfindung wird anhand der Figuren nachfolgend näher erläutert. Hierin zeigt
- Figur 1: eine Gesamtansicht der erfindungsgemäßen Vorrichtung in Seitenansicht;
- Figur 2: die Formwalze der Vorrichtung nach Figur 1 in Einzelheit.

Erhitzte und in fließfähigem Zustand vorgegebene Käseschmelze 1 wird über einen Zuführstutzen 2 der Vorrichtung zugeführt. Über eine insbesondere mit Teflon beschichtete Kalibrierwalze 4 und eine Formwalze 5 werden einzelne Formlinge 6 erzeugt, die mit ersten, zweiten und dritten Kühlbändern 3', 3" und 3'" hin zu einer Abgabeeinheit 18 geführt werden. Während des Transports über die Kühlbänder 3 werden die Formlinge gekühlt und damit aus ihrem fließfähigen Zustand in einen weitgehend festen Zustand überführt.

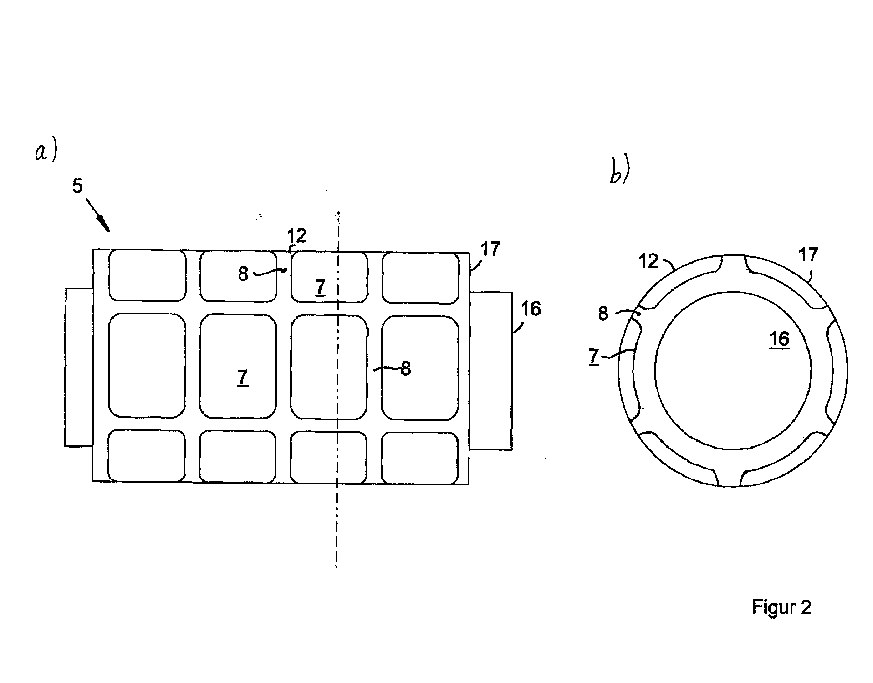

In einem oberen Bereich des ersten Kühlbands 3' ist eine Zuführeinheit zum Zuführen einer Hilfsfolie 10 vorgesehen. Auf diese Hilfsfolie 10, die sich im wesentlichen mit der gleichen Geschwindigkeit wie das erste Kühlband 3' und im Übrigen auch die anderen Kühlbänder 3", 3" bewegt, wird die fließfähige Käseschmelze 1 aufgebracht und liegt damit mittelbar auf dem ersten Kühlband 3' auf. Die fließfähige Käseschmelze 1 wird durch die Bewegung des ersten Kühlbandes 3' in Richtung einer Kalibrierwalze 4 gefördert. Durch Verändern des Abstandes der Kalibrierwalze 4 zur Umlenkwalze 11 des ersten Kühlbandes 3' entsteht eine bandförmige Käseschmelze 19 mit definierter Stärke. Die bandförmige Käseschmelze 19 wird aufgrund der Bewegung des ersten Kühlbandes 3' dann einer Formwalze 5 zugeführt, die näher in Figur 2 dargestellt ist. Demnach umfasst die Formwalze 5 eine Kernwalze 16 aus Edelstahl und eine Mantelwalze 17, die ebenfalls aus weitgehend aus Edelstahl gebildet ist, deren Oberflächen aber mit Teflon beschichtet sind. Alternativ kann auch ein Teflonrohr die Mantelwalze darstellen. In gleichmäßiger Anordnung sind mehrere Formnester 7 über den Umfang der Mantelwalze verteilt. Die Formnester 7 werden durch Trennstege 8 voneinander separiert. Der Übergang zwischen den Trennwänden und den Böden der Formnester kann jeweils auch ohne Radius ausgebildet sein. Im Querschnitt betrachtet bilden die Trennstege 8 eine zylindrische Form aus, die eine verbleibende Oberfläche 12 der Formwalze ausbildet. Diese verbleibende Oberfläche 12 wälzt auf dem ersten Kühlband 3' mittelbar ab. Die Mantelwalze 17 ist abnehmbar an der koaxial dazu angeordneten Kernwalze 16 angebracht, so dass ohne weiteres andere Mantelwalzen auf die Kernwalze aufgebracht werden können, falls andere Formen von Formlingen erwünscht sind.

Die verbleibende Oberfläche 12 der Formwalze 5 wälzt im wesentlichen gleitfrei auf dem ersten Kühlband 3' ab, so dass die sich Formwalze 5 im wesentlichen mit entsprechender Geschwindigkeit (10 % Geschwindigkeitsabweichung sind durchaus möglich) zum ersten Kühlband 3' rotiert. Dabei wird die Formwalze 5 derart mit Druck gegenüber der Umlenkwalze 11 auf das erste Kühlband 3' beaufschlagt, dass zwischen den Trennstegen 8 und dem Kühlband 3' keine Käsemasse mehr verbleiben kann. Die in den Formnestern 7 verbleibende Käseschmelze ist damit vollständig von dem Käse in den anderen Formnestern getrennt. In jedem der Formnester 7 ist somit ein einzelner Formling 6 aufgenommen. Im vorliegenden Beispiel stellt eine der Umlenkwalzen 11 die Gegendruckwalze dar, gegen die die Formwalze 5 beaufschlagt wird; es kann aber auch eine separate Gegendruckwalze verwendet werden, die keine Umlenkfunktion übernimmt.

Nachdem die bandförmige Käseschmelze 19 die Formwalze 5 passiert hat, ist der Käse somit nicht mehr als kontinuierliche Masse, sondern vielmehr separierte

Formlinge 6 vorhanden, welche zwischen den beiden Kühlbändern 3', 3" angeordnet sind. Zwischen dem zweiten Kühlband 3" und den Formlingen 6 ist jedoch eine weitere Folie, nämlich eine Zwischenlagenfolie 9 angeordnet, die durch eine Zuführeinheit 15 auf das zweite Kühlband 3" aufgebracht wird und sich im wesentlichen mit identischer Geschwindigkeit zum zweiten Kühlband 3" bewegt. Im Bereich des Einlassspalts 13, bei dem die Formlinge 6 zwischen das erste Kühlband 3' und das zweite Kühlband 3" gelangen, gerät die Zwischenlagenfolie 9 in Anlage mit den Formlingen 6. Die Zwischenlagenfolie 9 stellt dabei auch ein Mittel zur mittelbaren Anlage der Formlinge 6 an das zweite Kühlband 3" dar. Aufgenommen zwischen den beiden Kühlbändern 3' und 3", wobei jeweils die Folie 9 und 10 dazwischen angeordnet sind, passieren die Formlinge 6 die vertikale Strecke, die zwischen den ersten und zweiten Kühlbändern 3', 3" gebildet ist, bis hin zu einem Auslassspalt 14 am unteren Ende dieser Strecke. Der aus den Folien 9, 10 und den Formlingen 6 gebildete Produktstrang wird dann über die untere Umlenkwalze 11 des ersten Kühlbandes 3' umgelenkt, hin zu einem dritten Kühlband 3"', welches links neben dem ersten Kühlband 3' angeordnet ist. Hier wird der Produktstrang aus den Folien 9, 10 und den Formlingen 6 vertikal nach oben bewegt, wobei ferner eine Kühlung zwischen den Kühlbändern erfolgt. Anschließend wird der Produktstrang über die obere Umlenkwalze 11 des dritten Kühlbands 3"' umgelenkt und in Richtung Ausgabeeinheit 18 befördert. Vor Erreichen der Ausgabeeinheit 18 wird die Hilfsfolie 10 von der Oberfläche der Formlinge 6 entfernt, sodass lediglich die Zwischenlagenfolie 9 zwischen den Formlingen 6 und dem Kühlband 3'" vorhanden ist. Die Formlinge 6 werden mitsamt der Zwischenlagenfolie 9 von dem dritten Kühlband 3'" abgelöst und der Ausgabeeinheit 18 zugeführt. Anschließend können die Formlinge 6 endgültig voneinander separiert werden, indem die Zwischenlagenfolie 9 geschnitten wird. Die so gebildeten Einheiten aus Zwischenlagenfolie 9 und Formling 6 können dann der weiteren Verwendung zugeführt werden. Insbesondere können solche Einheiten gestapelt werden und anschließend verpackt werden.

Die erfindungsgemäße Vorrichtung zeichnet sich insbesondere dadurch aus, dass Formlinge und damit Käsescheiben, die von einer eckigen Struktur abweichen, ohne Verschnitt gebildet werden können. Es sind fast keine Grenzen in der Formgebung gegeben. Zugleich werden die Vorteile der vertikalen Kühlstrecke ausgenutzt. Dabei wird der Umstand genutzt, dass bereits die Formlinge im nahezu ungekühlten Zustand aus der Formwalze entnommen werden, was ein leichtes Entnehmen aus der Formwalze ermöglicht. Über die Anordnung der Kühlung zwischen den Kühlbändern wird ein gleichmäßiges Auskühlen der Formlinge erreicht, was zu einer gleichmäßigen Oberflächen beschaffenheit beitragen kann.

### Bezugszeichenliste

- 1: Käseschmelze
- 2: Zuführstutzen
- 3: Kühlband
- 4: Kalibrierwalze
- 5: Formwalze
- 6: Formling
- 7: Formnest
- 8: Trennsteg
- 9: Zwischenlagenfolie
- 10: Hilfsfolie
- 11: Umlenkwalze
- 12: Oberfläche
- 13: Einlassspalt
- 14: Auslassspalt
- 15: Vorrichtung zur Zuführung einer Zwischenlagenfolie
- 16: Kernwalze
- 17: Mantelwalze
- 18: Ausgabeeinheit
- 19: bandförmige Käseschmelze

## Patentansprüche

1. Verfahren zum Formen und Kühlen einer zunächst heißen und daher fließfähigen Käseschmelze (1), die über einen Zuführstutzen auf ein bewegtes metallisches Kühlband (3') aufgebracht wird, wobei mittels einer das Kühlband (3') beaufschlagenden Formwalze (5) mit in der Oberfläche befindlichen Formnestern (7) einzelne Formlinge (6) aus der Käseschmelze (1) geformt werden, wobei beim Formen ein Anpressdruck der Formwalze (5) gegen das Kühlband (3') vorgesehen wird, der eine vollständige Verdrängung der noch heißen Käseschmelze (1) aus dem Bereich der die einzelnen Formnester (7) begrenzenden und an dem Kühlband (3') anliegenden Trennstege (8) bewirkt, wobei die Formlinge (6) aus den Formnestern (7) ausgelöst und durch Verbleib auf dem bewegten Kühlband (3') gekühlt werden.

2. Verfahren nach Anspruch 1,
**dadurch gekennzeichnet,**
**dass** die auf dem Kühlband (3') aufliegenden Formlinge (6) von einem mit derselben Geschwindigkeit bewegten weiteren zweiten Kühlband (3") bedeckt werden.

3. Verfahren nach Anspruch 1 oder 2,
**dadurch gekennzeichnet,**
**dass** die Formlinge (6) an einem der Kühlbänder (3), insbesondere an zwei Kühlbändern (3', 3"), vermittels einer, insbesondere aus Kunststoff bestehenden, Zwischenlagenfolie (9) anliegen, wobei im Anschluss an die Kühlung der von der Zwischenlagenfolie (9) und den Formlingen (6) gebildete Produktstrang so orientiert wird, dass die Formlinge (6) auf der Zwischenlagenfolie (9) aufliegen und in dieser Orientierung der weiteren Verarbeitung zugeführt werden, wobei die aufliegenden Formlinge (6) in der weiteren Verarbeitung insbesondere durch Schneiden der Zwischenlagenfolie (9) vereinzelt werden.

4. Vorrichtung zum Formen und Kühlen einer zunächst heißen und daher fließfähigen Käseschmelze (1), aufweisend einen Zuführstutzen (2) zur Auftragung der Käseschmelze (1) auf ein bewegtes metallisches Kühlband (3') und aufweisend eine in Bewegungsrichtung hinter dem Zuführstutzen (2) angeordnete Formwalze (5), wobei die Formwalze (5) das Kühlband (3') an einer Stelle beaufschlagt, an der dieses an einer Gegendruckwalze (11) anliegt, wobei die Formwalze (5) eine Anzahl in die Oberfläche eingebrachter Formnester (7) aufweist, die durch Trennstege (8) gegeneinander abgetrennt sind, wobei die Trennstege (8) von der verbleibenden Oberfläche (12) der Formwalze (5) ausgebildet sind, wobei die Formwalze (5) vermittels der Trennstege (8) einen Anpressdruck auf das Kühlband (3') ausübt, der zur vollständigen Verdrängung der noch heißen Käseschmelze (1) aus dem Bereich der aufliegenden Trennstege (8) führt, wobei die aus den Formnester (7) ausgelösten Formlinge (6) aus Käseschmelze (1) zur Kühlung auf dem bewegten Kühlband (3') verbleiben.

5. Vorrichtung nach Anspruch 4,
**gekennzeichnet durch**
ein weiteres zweites Kühlband (3"), das mit derselben Geschwindigkeit wie das erste Kühlband (3') bewegt ist und die auf dem ersten Kühlband (3') aufliegenden Formlinge (6) bedeckt.

6. Vorrichtung nach Anspruch 5,
**dadurch gekenntzeichnet,**
dass die Kühlbänder (3) als endlose Stahlbänder ausgebildet sind, die jeweils über zwei Umlenkwalzen (11) laufen, wobei die Kühlbänder (3) vertikal parallel angeordnet sind und Oben einen Einlassspalt (13) und Unten einen Auslassspalt (14) bilden.

7. Vorrichtung nach einem der Ansprüche 4 bis 6,
**gekennzeichnet durch**
eine Vorrichtung (15) zur Zuführung einer Zwischenlagenfolie (9) in den Einlassspalt (13) derart, dass die Formlinge (6) an einem der Kühlbänder (3) vermittels der insbesondere aus Kunststoff bestehenden Zwischenlagenfolie (9) anliegen.

8. Vorrichtung nach einem der Ansprüche 4 bis 7,
**gekennzeichnet durch**
eine Kalibrierwalze (4), die in Bewegungsrichtung hinter dem Zuführstutzen (2) und vor der Formwalze (5) angeordnet ist und die ein Auswalzen der heißen Käseschmelze (1) zu einem Käseband vorgebbarer Stärke bewirkt.

9. Vorrichtung nach einem der Ansprüche 4 bis 8,
**dadurch gekennzeichnet,**
**dass** die mit den Formnestern (7) versehene Oberfläche (12) der Formwalze (5) aus einem Kunststoff, insbesondere aus Teflon, ist.

10. Vorrichtung nach einem der Ansprüche 4 bis 9,
**dadurch gekennzeichnet,**
**dass** die Formwalze (5) von einer Kernwalze (16) und einer auf die Kernwalze (16) lösbar aufgesetzten Mantelwalze (17) gebildet wird, wobei die Mantelwalze (17) die mit den Formnestern (7) versehene Oberfläche (12) ausbildet.

11. Vorrichtung nach einem der Ansprüche 4 bis 10,
**dadurch gekennzeichnet,**
**dass** die Formwalze (5) und/oder die Kalibrierwalze (4) und/oder zumindest eine der Umlenkwalzen (11) Mittel zur Kühlung aufweisen.

## Claims

1. A method for forming and cooling an initially hot and therefore flowable melted cheese (1), which is applied via a supply nozzle onto a moving metallic cooling belt (3'), wherein individual shaped bodies (6) are formed out of the melted cheese (1) in that a shaping roller (5), which comprises molding cavities (7) located in the surface, impinges upon the cooling belt (3'), wherein a pressure of the shaping roller (5) against the cooling belt (3') is provided during forming that induces full displacement of the still-hot melted cheese (1) from the region of the separating webs (8) delimiting the individual molding cavities (7) and bearing against the cooling belt (3'), wherein the formed bodies (6) are released from the molding cavities (7) and are cooled by remaining on the moving cooling belt (3').

2. The method according to claim 1,
**characterized in that**
the shaped bodies (6) lying on the cooling belt (3') are covered by a further, second cooling belt (3") moving at the same speed.

3. The method according to claim 1 or 2,
**characterized in that**
the shaped bodies (6) lie on one of the cooling belts (3), more particularly on two cooling belts (3', 3"), by way of an interlayer film (9) comprising plastic in particular, wherein, after cooling, the product strand formed of the interlayer film (9) and the shaped bodies (6) is oriented such that the shaped bodies (6) lie on the interlayer film (9) and are fed in this orientation to the further processing, wherein the formed bodies (6) lying thereupon are separated in the further processing by cutting the interlayer film (9) in particular.

4. A device for forming and cooling an initially hot and therefore flowable melted cheese (1), comprising a supply nozzle (2) for applying the melted cheese (1) onto a moving metallic cooling belt (3') and comprising a shaping roller (5) disposed downstream of the supply nozzle (2) in the direction of motion, wherein the shaping roller (5) impinges upon the cooling belt (3') at a point at which the cooling belt bears against a counterpressure roller (11), wherein the shaping roller (5) comprises a number of molding cavities (7) formed in the surface, which are separated from one another by separating webs (8), wherein the separating webs (8) are formed by the remaining surface (12) of the shaping roller (5), wherein the shaping roller (5) applies a pressure by way of the separating webs (8) onto the cooling belt (3') that results in the full displacement of the still-hot melted cheese (1) from the region of the separating webs (8) lying thereupon, wherein the shaped bodies (6) of melted cheese (1) released from the molding cavities (7) remain on the moving cooling belt (3') for cooling.

5. The device according to claim 4,
**characterized by**
a further, second cooling belt (3"), which is moved at the same speed as the first cooling belt (3') and covers the shaped bodies (6) lying on the first cooling belt (3').

6. The device according to claim 5,
**characterized in that**
the cooling belts (3) are designed as endless steel belts, each of which runs over two deflection rollers (11), wherein the cooling belts (3) are arranged vertically in parallel and form an inlet gap (13) at the top and an outlet gap (14) at the bottom.

7. The device according to one of the claims 4 to 6,
**characterized by**
a device (15) for feeding an interlayer film (9) into the inlet gap (13) such that the shaped bodies (6) lie on one of the cooling belts (3) by way of the interlayer film (9) comprising plastic in particular.

8. The device according to one of the claims 4 to 7,
**characterized by**
a calibration roller (4), which is disposed, in the direction of motion, downstream of the supply nozzle (2) and upstream of the shaping roller (5) and which brings about a rolling-out of the hot melted cheese (1) into a cheese band having a specifiable thickness.

9. The device according to one of the claims 4 to 8,
**characterized in that**
the surface (12) of the shaping roller (5) equipped with the molding cavities (7) is made of a plastic, more particularly of Teflon.

10. The device according to one of the claims 4 to 9,
**characterized in that**
the shaping roller (5) is formed by a core roller (16) and a hollow roller (17) detachably placed onto the core roller, wherein the hollow roller forms the surface (12) equipped with the molding cavities (7).

11. The device according to one of the claims 4 to 10,
**characterized in that**
the shaping roller (5) and/or the calibration roller (4) and/or at least one of the deflection rollers (11) comprise means for cooling.

## Revendications

1. Procédé de formage et refroidissement de fromage fondu d'abord chaud et donc fluide (1) qui est appliqué à l'aide d'une tubulure d'acheminement sur une bande de refroidissement métallique déplacée (3'), dans lequel des ébauches individuelles (6) sont formées à partir du fromage fondu (1) au moyen d'un rouleau de formage (5) sollicitant la bande de refroidissement (3') et présentant des cavités de moulage (7) se trouvant dans sa surface, dans lequel, lors du moulage, est prévue une force de compression du rouleau de formage (5) contre le bande de refroidissement (3) qui provoque un refoulement complet du fromage fondu encore chaud (1) hors de la zone des traverses de séparation (8) limitant les différentes cavités de moulage (7) et reposant sur la bande de refroidissement (3'), les ébauches (6) étant détachées des cavités de moulage (7) et refroidies en les laissant sur la bande de refroidissement (3').

2. Procédé selon la revendication 1,
**caractérisé en ce que**
les ébauches (6) reposant sur la bande de refroidissement (3'), sont couvertes d'une seconde autre bande de refroidissement (3") déplacée à la même vitesse.

3. Procédé selon la revendication 1 ou 2,
**caractérisé en ce que**
les ébauches (6) reposent sur une des bandes de refroidissement (3), en particulier sur deux bandes de refroidissement (3', 3") par l'intermédiaire d'un film intercalaire (9) composé en particulier de matériau artificiel, procédé dans lequel, après le refroidissement, le cordon de produit formé par le film intercalaire (9) et les ébauches (6) est orienté de manière à ce que les ébauches (6) reposent sur le film intercalaire (9) et soient acheminées vers le traitement ultérieur dans cette orientation, les ébauches posées (6) étant individualisées lors du traitement ultérieur en particulier en coupant le film intercalaire (9).

4. Dispositif de formage et refroidissement de fromage fondu d'abord chaud et donc fluide (1), présentant une tubulure d'acheminement (2) pour appliquer le fromage fondu (1) sur une bande de refroidissement métallique déplacée (3') et présentant un rouleau de formage (5) disposé derrière la tubulure d'acheminement (2) dans le sens de mouvement, le rouleau de formage (5) sollicitant la bande de refroidissement (3') à un point où celle-ci est en contact avec un rouleau de contre-pression (11), le rouleau de formage (5) présentant un certain nombre de cavités de moulage (7) pratiquées dans la surface et qui sont séparées les unes des autres par des traverses de séparation (8), les traverses de séparation (8) étant constituées par la surface restante (12) du rouleau de formage (5), le rouleau de formage (5) exerçant sur la bande de refroidissement (3') par l'intermédiaire des traverses de séparation (8) une force de compression qui entraîne un refoulement complet du fromage fondu encore chaud (1) hors de la zone des traverses de séparation (8) reposant dessus, les ébauches (6) détachées des cavités de moulage (7) et faites de fromage fondu (1) restant pour refroidissement sur la bande de refroidissement (3') déplacée.

5. Dispositif selon la revendication 4,
**caractérisé par**
une autre seconde bande de refroidissement (3") qui est déplacée à la même vitesse que la première bande de refroidissement (3') et qui couvre les ébauches (6) reposant sur la première bande de refroidissement (3').

6. Dispositif selon la revendication 5,
**caractérisé par**
les bandes de refroidissement (3) se présentent sous forme de bandes d'acier continues qui passent respectivement par deux rouleaux d'inversion (11), les bandes de refroidissement (3) étant disposées parallèlement à la verticale et formant en haut une colonne d'entrée (13) et en bas une colonne de sortie (14).

7. Dispositif selon une des revendications 4 à 6,
**caractérisé par**
un dispositif (15) d'acheminement d'un film intercalaire (9) dans la colonne d'entrée (13) tel que les ébauches (6) reposent sur une des bandes de refroidissement (3) par l'intermédiaire du film intercalaire (9) composé en particulier de matériau artificiel.

8. Dispositif selon une des revendications 4 à 7,
**caractérisé par**
un rouleau d'étalonnage (4) qui est disposé dans le sens de mouvement derrière la tubulure d'acheminement (2) et avant le rouleau de formage (5) et qui provoque un laminage du fromage fondu chaud (1) en une bande de fromage d'une épaisseur prédéfinissable.

9. Dispositif selon une des revendications 4 à 8,
**caractérisé en ce que**
la surface (12) pourvue des cavités de moulage (7) du rouleau de formage (5) est en matériau artificiel, en particulier en téflon.

10. Dispositif selon une des revendications 4 à 9,
**caractérisé en ce que**
le rouleau de formage (5) est constitué d'un rouleau central (16) et d'un rouleau d'enveloppement (17) posé de manière dissociable sur le rouleau central (16), le rouleau d'enveloppement (17) constituant la surface (12) pourvue des cavités de moulage (7).

11. Dispositif selon une des revendications 4 à 10,
**caractérisé en ce que**
le rouleau de formage (5) et/ou le rouleau d'étalonnage (4) et/ou au moins un des rouleaux d'inversion (11) présentent des moyens de refroidissement.
